# EUROPEAN PATENT APPLICATION

(11) **EP 3 276 558 A1**
(43) Date of publication of application: **31.01.2018**
(21) Application number: 17169865.7
(22) Date of filing: 08.05.2017
(51) Int. Cl.: G06Q 20/40, G06Q 20/34, G06Q 20/32

(54) **REMOTE PAYMENT METHOD AND APPARATUS**

(30) Priority: 28.07.2016 KR 20160096179
(71) Applicant: Samsung Electronics Co., Ltd., Gyeonggi-do 16677 (KR)
(72) Inventor: PARK, Jinwoo, 16677 Gyeonggi-do (KR); WOO, Kyoung Gu, 443-742 Gyeonggi-do (KR)
(74) Representative: D'Halleweyn, Nele Veerle Trees Gertrudis

(57) **Abstract**

Provided is a remote payment method and apparatus. A remote payment method performed by a user terminal includes receiving payment information regarding an agent terminal interacting with a payment terminal for a payment transaction between the agent terminal and the payment terminal, determining whether the received payment information satisfies a predetermined payment condition, and providing payment permission information to at least one of the agent terminal or a payment approval server to permit use of a payment tender of an entity other than a user of the agent terminal, in response to the payment condition being satisfied. The agent terminal may transmit the payment information and card indication information, indicative of card information for the payment tender, to the user terminal. The agent terminal transfers received card information from the user terminal, based on the determining, to at least one of the payment terminal or the payment approval server.

## Description

### CROSS-REFERENCE TO RELATED APPLICATION(S)

This application claims the benefit under 35 USC § 119(a) of Korean Patent Application No. 10-2016-0096179 filed on July 28, 2016, in the Korean Intellectual Property Office, the entire disclosure of which is incorporated herein by reference for all purposes.

### BACKGROUND

### 1. Field

The following description relates to a remote payment method and apparatus.

### 2. Description of Related Art

The propagation of the use smartphones has resulted in a transition from mobile terminals being primarily used as a simple communication medium to such mobile terminals being used as multi-functional devices available for communication, distribution, the Internet, local payment, and the like. Such changes have brought about further changes in social culture, finance, distribution, and industry overall.

In terms of a payment settlement field, generalization of mobile payment methods based on the smartphone may substitute for typical payment method such as cash and credit cards. Thus, mobile payment services may provide payment services for online and offline purchases using the mobile device. For example, a local payment method using a near field communication (NFC) communication module of a payer's phone has been used in general for one-to-one direct provision of the payer's credit card information to a point of sale (POS) terminal of a seller. Similarly, Internet purchases have also been made available through one-to-one direct payer entry of credit card information through a seller's Internet site.

### SUMMARY

This Summary is provided to introduce a selection of concepts in a simplified form that are further described below in the Detailed Description. This Summary is not intended to identify key features or essential features of the claimed subject matter, nor is the Summary intended to be used as an aid in determining the scope of the claimed subject matter.

In one general aspect, a processor implemented remote payment method performed by a user terminal includes receiving payment information regarding an agent terminal interacting with a payment terminal for a payment transaction between the agent terminal and the payment terminal, determining whether the received payment information satisfies a predetermined payment condition, and providing payment permission information to at least one of the agent terminal or a payment approval server to permit use of a payment tender of an entity other than a user of the agent terminal interacting with the payment terminal, in response to the payment condition being satisfied.

The determining of whether the received payment information satisfies the payment condition may include determining whether the payment condition satisfies a payment condition pre-assigned to card indication information received from the agent terminal or the payment approval server for the payment transaction, and the providing of the payment permission may include providing card information corresponding to the card indication information.

The payment information may be payment transaction information generated by the payment terminal or the agent terminal, for or in response to a contact between the payment terminal and the agent terminal, and includes at least one of a type of business, a name of merchant, an address of the merchant, a selling item, and a selling price of the selling item with respect to the payment transaction, and the determining of whether the received payment information satisfies the payment condition may include determining whether the payment information satisfies at least one conditional item, from among plural conditional items, previously designated as being associated with the card indication information.

The method may further include receiving a generation request for card indication information, indicative of card information stored in the user terminal, from at least one of the agent terminal or the payment approval server, and generating the card indication information in response to the generation request and providing the generated card indication information to the agent terminal or the payment approval server.

The generation request may be received from the agent terminal and the generated card indication information is provided to the agent terminal.

The method may further include providing a user interface configured to enable a user of the user terminal to assign the payment condition to card indication information, the card indication information being indicative of the payment tender, and the determining being based on the card indication information.

The payment information may be payment transaction information generated by the payment terminal in response to a contact between the payment terminal and the agent terminal, and the determining of whether the received payment information satisfies the payment condition may include determining whether the payment information satisfies at least one conditional item, from among plural conditional items, previously designated as being associated with the payment tender.

The payment information may include device information of the agent terminal, and the determining of whether the received payment information satisfies the payment condition may include determining whether the device information satisfies at least one conditional item, from among plural conditional items, previously designated as being associated with the payment tender.

The payment information may include additional information collected by an application installed in the agent terminal, and the determining of whether the received payment information satisfies the payment condition may include determining whether the additional information satisfies at least one conditional item, from among plural conditional items, previously designated as being associated with the payment tender.

The method may further include requesting the agent terminal send at least one of device information associated with the agent terminal and additional information collected by an application installed in the agent terminal when the determining of whether the received payment information satisfies the payment condition takes into consideration at least one of the device information and the additional information.

The method may further include requesting a payment approval permission manipulation from a user of the user device for the payment information in response to a result of the determining being that the payment condition is not satisfied, authenticating whether the payment approval permission manipulation is valid, and providing, in response to a result of the authenticating being that the payment approval permission manipulation is valid, card information with respect to the payment tender and/or payment permission information to at least one of the agent terminal or the payment approval server.

The providing may include providing the payment permission information to the at least one of the agent terminal or the payment approval server, indicating permission of the agent or the payment approval server to use respectively locally stored card information with respect to the payment tender for the payment transaction.

The method may further include sampling a biosignal from the user as the payment approval permission manipulation, and the authenticating of whether the payment approval permission manipulation is valid may include searching a database for registered biometric information matching the biosignal, and determining that the payment approval permission manipulation is valid in response to the registered biometric information being found as a result of the searching.

The method may further include executing a remote payment application, and establishing, with respect to an agent application installed in the agent terminal and associated with the remote payment application, a communication channel between the remote payment application and the agent application, where the receiving of the payment information may include receiving the payment information through the communication channel, and the providing of the permission information may include transmitting card information with respect to the payment tender to the agent terminal through the communication channel.

In one general aspect, a non-transitory computer-readable medium may be provided storing instructions, that when executed by a processor, cause the processor to perform one or more or all processes described herein.

In one general aspect, a remote payment apparatus includes a communicator, and a processor configured to determine whether payment information, received by the communicator from an agent terminal interacting with a payment terminal for a payment transaction between the agent terminal and the payment terminal, satisfies a predetermined payment condition, and to provide payment permission information to at least one of the agent terminal or a payment approval server to permit use of a payment tender of an entity other than a user of the agent terminal interacting with the payment terminal, in response to the payment condition being satisfied.

In one general aspect, a processor implemented remote payment method performed by an agent terminal includes transmitting payment information regarding a payment transaction, between a payment terminal and the agent terminal, and card indication information to another terminal, the card indication information being indicative of card information, for a payment tender, stored in the other terminal, and transferring the card information to at least one of the payment terminal or a payment approval server, in response to receipt of a payment permission from the other terminal with regard to using the payment tender for the payment transaction.

The method may further include receiving the card indication information from the other terminal and storing the received card indication information, and selecting the card indication information in response to receiving a user manipulation while a remote payment application is executed, where the transmitting of the card indicative information to the other terminal may include transmitting the selected card indicative information.

The method may further include storing respective card information, including the card information, of different payment tenders, where the transmitting of the card indication information to the other terminal may include generating card indication information corresponding to a selected one of the respective card information, and transmitting the generated card indication information to the other terminal.

The transmitting of the card indication information to the other terminal may include requesting the other terminal send the card information to the agent terminal in response to the agent terminal determining that the payment information satisfies a payment condition assigned to the card indication information, where the transmitting of the card indication information and the payment information to the other terminal may be performed only in response to on a result of the determination being that the payment information satisfies the payment condition.

In one general aspect, a processor implemented remote payment method includes transmitting payment information corresponding to a payment transaction, occurring with a first user terminal, to a second user terminal, receiving card information stored in the second user terminal that is transmitted to the first user terminal in response to a determination that the payment information satisfies a predetermined payment condition, and sending a payment request to at least one of a payment terminal or a payment approval server based on received card information, the received card information being of a payment tender of an entity other than a user of the first user terminal.

The method may further include transmitting the card information stored in the second user terminal to the first user terminal in response to the determining performed by the second user terminal, generating card indication information indicating the card information as a selected one of respective card information stored in the second user terminal, and providing the generated card indication information to the first user terminal.

The first user terminal may transmit the card indication information to the second user terminal when the payment information is transmitted to the second user terminal, and the determining may be performed by the second user terminal dependent on the transmitted card indication information.

The method may further include storing the card information in the first user terminal with the first user terminal being controlled to only use the stored card information for payment transactions upon respectively received payment permissions from the second user terminal regarding permitted use of the card information for the payment transactions.

The method may further include controlling the first user terminal to not store the received card information and to send the payment request with the received card information to the payment terminal or the payment approval server only for the payment transaction.

In one general aspect, a processor implemented remote payment method performed by a user terminal includes receiving a request for card indication information, generating the card indication information, the generated card indication information being indicative of a payment tender, providing the generated card indication information to an agent terminal in response to the request for the card indication information, and determining, in response to receiving from the agent terminal payment information obtained based on the provided card indication information and for a payment transaction involving the agent terminal, whether to permit the payment transaction corresponding to the payment information with the payment tender.

Other features and aspects will be apparent from the following detailed description, the drawings, and the claims.

### BRIEF DESCRIPTION OF THE DRAWINGS

FIG. 1 illustrates an example remote payment system.
FIGS. 2 and 3 illustrate example remote payment apparatuses.
FIG. 4 illustrates an example remote payment method performed by a second user terminal.
FIG. 5 illustrates an example remote payment method performed by a first user terminal.
FIGS. 6 and 7 illustrate an example remote payment process in which a second user terminal directly permits a payment.
FIGS. 8 and 9 illustrate an example remote payment process in which a second user terminal indirectly permits a payment.
FIG. 10 illustrates an example remote payment method.
FIG. 11 illustrates an example remote payment method.
FIGS. 12 through 14 illustrate example remote payment implementations according to one or more embodiments.

Throughout the drawings and the detailed description, unless otherwise described or provided, the same drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known in the art may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. Accordingly, as the following structural or functional descriptions are provided to merely describe or explain non-limiting examples, the scope of the respective examples are not limited to the descriptions provided in the present specification.

Terms such as first, second, A, B, (a), (b), and the like may be used herein to describe components. Each of these terminologies is not used to define an essence, order, or sequence of a corresponding component but used merely to distinguish the corresponding component from other component(s), unless expressly explained otherwise. For example, a first component may be referred to a second component, and similarly the second component may also be referred to as the first component.

It should be noted that if it is described in the specification that a first component is or may be "connected," "coupled," or "joined" to a second component, embodiments exist where no component is "connected," "coupled," and "joined" between the first and second components, e.g., with the first component being directly connected, coupled, or joined to the second component, and embodiments exist where a third component is "connected," "coupled," and "joined" between the first and second components. Thus, it should be noted that if it is described in the specification that one component is "directly connected" or "directly joined" to another component, a third component or any other component may not be present therebetween. Likewise, expressions, for example, "between" and "immediately between" and "adjacent to" and "immediately adjacent to" may also be construed as described in the foregoing.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the example terms "comprises," "comprising," "includes," "including," "have", and/or "having" when used in the Specification, specify the presence of stated features, integers, operations, elements, and/or components in at least one embodiment, such as when it is indicated that such stated features, integers, operations, elements, components or a combination thereof may be included in an example. However, the use of include/including, comprise/comprising, and have/having in the Specification does not preclude the presence or addition of one or more other features, integers, operations, elements, components, and/or groups thereof in other embodiments, and does not preclude in the Specification the lack of presence of any of such features, integers, operations, elements, components, and/or groups thereof in still other embodiments unless explicitly or contextually/implicitly clearly explained otherwise.

Unless otherwise defined, all terms, including technical and scientific terms, used herein have the same meaning as commonly understood by one of ordinary skill in the art to which this disclosure pertains consistent with and after an understanding of the present disclosure. Terms, such as those defined in commonly used dictionaries, are to be interpreted as having a meaning that is consistent with their meaning in the context of the relevant art and the present disclosure, and are not to be interpreted in an idealized or overly formal sense unless expressly so defined herein.

As a representative payment method for purchasing products or services, a mobile device including a payment function or a magnetic card may be used. Here, a user may locally pay for purchases without the need to carry actual money, that is, cash, by using in-person other payment methods or tender that the particular user is contractually authorize to use. Also, the user may access an online payment system for an Internet electronic-commerce (e-commerce) using a personal terminal which is available for communication in order to use similar contractually authorized payment methods such as the magnetic card, cash deposits, and the like. However, consignment payment with the aforementioned payment method may be impossible or inconvenient. Consignment payments may be payments made using a tender of a second person, who is contractually authorized to use the tender, by a first person that is not contractually authorized to use the tender. For example, when using a company credit card for a payment on consignment, the payment may need to be later proved with a receipt and thus, the user may experience inconvenience. Also, when the expenses are determined to include non-reimbursable items, the user may take a risk that the user has to pay for the corresponding item from the user's own account. Additionally, there is a risk that transactions may be unclearly managed.

As noted, with development of smart devices, for example, a smartphone and a tablet personal computer (PC), the smart devices have been used as local payment alternatives, e.g., as alternatives to cash or physical credit/debit cards when performing local payment exchanges between the bearer of the cash or the authorized user of the credit/debit card and the product or service salesperson. As such local payment alternatives, smart devices may be devices that are configured to integrally perform payment, storing, communicating, computing, and securing functions for such local in-person payer-salesperson payment operations.

Herein, in differing embodiments, compared to the example limited local in-person payer-salesperson one-to-one payment process, a representative payment corresponds to a payment using an authorizing payer's credit card, as only an example, such as credit card information or other information for the same, by an intermediary device of a representative user that may be locally or in-person interacting with a payment device of the example salesperson, separate and/or independent from any interactions between a device of the authorizing payer and the payment device of the example salesperson and/or between the device of the authorizing payer and the intermediary device of the representative user, such that the authorizing payer can be remote from the local or in-person payment exchange between the salesperson and the representative user. Through an automated process, the device of the authorizing payer may be configured to enable the authorizing payer to either previously conditionally authorize the representative user's use or access, to be provided or received, to the remote authorizing user's example credit card, or information for the same, or authorize the use or access, to be provided or received, to the example credit card, or information for the same, in real-time at the time of the payment exchange.

As a non-limiting example, a representative user may be a friend, helper, or relative of the authorizing payer, where the authorizing payer has previously approved, based on pre-established conditions through an automated system and process, use of the authorizing payer's credit card, for example, for purchases or payments by and for the friend, helper, or relative (or for the remote payers) using a payment enabled device of the friend, helper, or relative or where the authorizing payer is enabled through an automated system and process to approve the use of the authorizing payer's example credit card, or information for the same, for the friend, helper, or relative's purchases or payments with the payment enabled device in real-time. As another non-limiting example, the representative user may be an employee or agent of the employer-authorizing payer, where the employee or agent is pre-authorized to use the authorizing payer's credit card, for example, or information for the same, for purchases or services based on pre-established conditions through an automated system and process or the authorizing payer is enabled to approve purchases or payment exchanges using the employer payer's example credit card, or information for the same, in real-time using through an automated system and process. In these non-limiting examples, such pre-established conditions and/or the real time authorizations may be enabled through an automated computing system that linked or links the authorizing payer's remote terminal(s) and the representative user's device(s), the example salesperson's device, and/or an example credit card payment clearing house server, either prior to a payment exchange, in real-time with the same to authorize or complete the payment exchange between the representative user and the example salesperson. Here, though examples have been provided, embodiments are not limited to the same, and additional and alternate embodiments are also available.

Accordingly, hereinafter, remote payment methods and apparatuses that may readily be used for representative payments according to one or more embodiments will be further described.

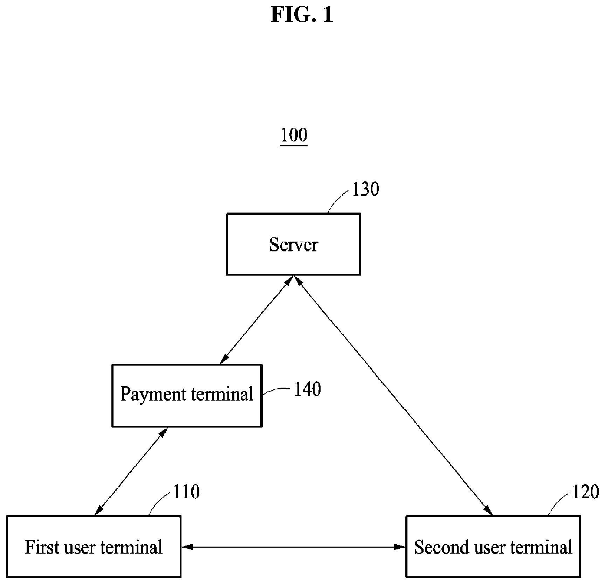

FIG. 1 illustrates an example remote payment system.

A remote payment system 100 includes a first user terminal 110, a second user terminal 120, a server 130, and a payment terminal 140, for example.

The first user terminal 110 may be a terminal performing a representative payment, e.g., on behalf of the second user terminal 120 or on behalf of the first user terminal 110, using card information of the user of the second user terminal 120, for example. The second user terminal 120 may be a terminal of a user whose example card information may be stored on the second user terminal 120 and/or the first user terminal 110 and which may be used by the representative user of the first user terminal 110 for the representative payment. For example, for a payment process between the first user terminal 110 and the payment terminal 140, the first user terminal 110 may receive, or may have previously received, card information from the second user terminal 120 and may request that the payment terminal 140 perform a payment using the card information. In such an example, the first user terminal 110 may send a request for payment permission to the second user terminal 120 through wired or wireless communication, may receive the card information from the second user terminal 120 or may receive authorization from the second user terminal 120 to use card information previously provided to the first user terminal 110, e.g., from the second user terminal 120. Based on the response from the second user terminal 120 with respect to the request for payment permission, the first user terminal 110 may request the payment terminal 140 to perform the payment using the card information. The payment terminal 140 may then request and receive authorization or payment approval confirmation from the server 130 for completion of the payment using the card information, for example. Hereinafter, the first user terminal 110 may also be referred to as an agent or representative terminal.

In this disclosure, a card means, for example, a payment method or tender used for cash-free purchases of goods or services, for example, provided from a seller, which may be contracted with an issuer of the card, for example. As only examples, the card may be classified as a credit card, a debit card, and a point card based on a type of contract between a user and a card issuer. The card may also be classified as a magnetic card and an integrated circuit (IC) card based on a physical form for transactions. Here, though examples have been provided for the meaning of the card term, it is respectfully submitted that embodiments are not limited thereto.

Card information means information associated with the card. The card information may include, as non-limiting examples, a card number, an expiration date of the card, a password of the card, and/or a card security code (CSC). The CSC may also be referred to as a card verification value (CVV) and a card verification code (CVC).

The second user terminal 120 is a terminal configured to permit a payment between the first user terminal 110 and the payment terminal 140 based on a preset payment condition by the user of the second user terminal 120 or an action by the user of the second user terminal 120 at the time of the payment transaction, e.g., in real-time, between the first user terminal 110 and the payment terminal 140. The second user terminal 120 may also pre-authorize permission for payment(s) based on a payment condition or payment situation identified by the first user terminal 110 to the second user terminal 120, e.g., where the user of the first user terminal 110 (or the first user terminal 110 itself) suggests to the second user terminal 120 the example preset payment condition or provides a situational request to the second user terminal 120 before the payment transaction begins, and the user of the second user terminal 120 (or the second user terminal 120 itself based on other preset conditions) merely approves or disapproves of the pre-authorization request. Hereinafter, the user of the second user terminal 120 may also be referred to as a second user, or a payer or master user, and the second user terminal 120 may also be referred to as a mobile terminal or a master user terminal. Herein, the reference to the second terminal 120 being a mobile terminal is not intended to limit the second terminal 120 to being mobile, but refers to a non-limiting potential of the second user terminal 120 to be remote from the first user terminal 110 or separate from the payment transaction between the first user terminal 110 and the payment terminal 140.

The payment condition may be a condition previously set for a predetermined payment performance or a category of payment performances, for example, e.g., such that a remote payment apparatus permits a corresponding payment or payment for a product or service corresponding to the pre-approved category of purchases or services. In an example, the payment condition is set by the second user terminal 120. In an additional or alternative example, the payment condition may be suggested by the first user terminal 110. In such examples, when a current payment transaction satisfies the previously set payment condition, the second user terminal 120 may automatically permit the payment, e.g., without requiring an additional approval be input or action performed by the second user, or the first user terminal 110 automatically permits the payment using previously provided card information without further approval or provision of the card information by the second user terminal 120. Hereinafter, the remote payment apparatus may be the first user terminal 110 or the second user terminal 120.

The server 130 receives a payment request from at least one of the first user terminal 110, the second user terminal 120, and the payment terminal 140. The server 130 determines whether to approve the received payment request. For example, the server 130 verifies whether the payment request is valid and processes the payment request such that an actual payment is carried out. The server 130 may be a payment processing server of a corresponding card issuer, for example, or other clearing house server, as only examples.

The payment terminal 140 is a terminal configured to transfer the payment request to the server 130. The payment terminal 140 receives the payment request from the first user terminal 110, transfers the payment request to the server 130, and receives a payment result from the server 130. The payment terminal 140 is, for example, a point of sale (POS) system provided to a seller contracted with a card issuer. In an example, the POS system may include near field communication (NFC), RFID, and/or Wi-Fi antenna(s) and corresponding communication hardware module(s), as well as wired communication hardware modules, and may be configured to interface and interoperate remotely, locally, and/or in-person with one or more different user terminals or servers for exchanging of data, payment requests, payment results, payment information, approval requests and confirmations, generated card indication information, and/or card information, as only examples. For example, the payment terminal 140 may be configured so the antenna of the payment terminal 140 couples, pairs, or links with an antenna of the in-person example first user terminal 110, such as in an NFC environment. The exchanging of information to and from the payment terminal 140 may be secure, and may be encrypted.

The remote payment system 100 is applicable to a smartphone, a tablet (PC), and the like that provides a payment function, e.g., with any of the payment terminal 140, the first user terminal 110, and the second user terminal 120 being such example terminals, including mobile and non-mobile or typically stationary terminals. The remote payment system 100 may be combined or implemented with one or more different mobile payment technologies, for example, including Samsung pay.

Once the example payment condition is satisfied, the remote payment system 100 automatically permits a representative payment, e.g., locally between the first user terminal 110 and the payment terminal 140, without requiring either manual approval or authentication actions be performed by, or receipt of indication of the same by the first user terminal 110, the master user, e.g., the authorized user of the example card, and at a long distance from the representative payment. To this end, the remote payment system 100 may transfer payment information collected in/by the first user terminal 110 to the second user terminal 120 corresponding to a terminal used by the master of the card, and the second user terminal 120 may automatically permit the representative payment between the first user terminal 110 and the payment terminal 140 based on corresponding payment information satisfying predetermined conditions.

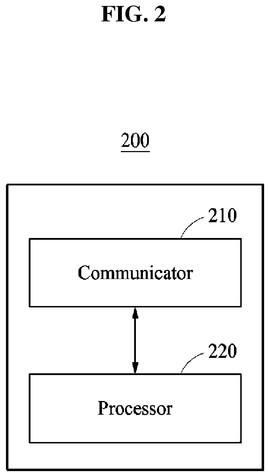

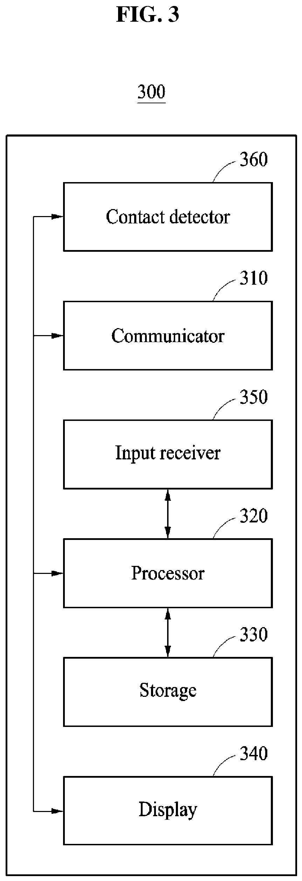

FIGS. 2 and 3 illustrate example remote payment apparatuses.

The first user terminal 110 and the second user terminal 120 of FIG. 1 may each be configured as a remote payment apparatus illustrated in FIGS. 2 and 3. For example, the remote payment apparatus may operate as an agent terminal to perform a representative payment or operate as a mobile terminal to determine whether to permit a representative payment. Also as an example, for one payment transaction a remote payment apparatus could operate as an agent terminal for a local or in-person representative payment with a payment terminal, and in another transaction the same remote payment apparatus could operate as the mobile terminal or master terminal and be controlling of whether a representative payment is permitted between another remote payment apparatus and another payment terminal or even with the same payment terminal.

FIG. 2 illustrates an example remote payment apparatus 200 that includes a communicator 210 and a processor 220, for example.

The communicator 210 is a communication hardware that is configured to communicate with one or more external terminals, servers, and/or devices. The communicator 210 may be controlled to communicate with a user terminal, a payment terminal, and/or a server. For example, the communicator 210 may be controlled to communicate with other devices through at least one of wired communication and wireless communication for which the communicator 210 is configured to implement. In a mobile terminal, for example, a communicator 210 of the mobile terminal may receive payment information and card indication information from an agent terminal. In the agent terminal, a communicator 210 of the agent terminal may be controlled to transmit the card indication information and the payment information including, for example, information of an identified payment venue or circumstance, to the communicator 210 of the mobile terminal.

In this disclosure, the term card indication information means or corresponds to information that is indicative of a card or card information and differs from the actual card information, e.g., card information of an example physical or virtual card tender. For example, the card indication information may include, for example, a serial number, a symbol, a letter, and a number that is identifying, indicating, or indicative of the card information. For example, while an example card information may include a credit card number, the card indication information may include contact information of a mobile terminal to which a payment approval request is to be ultimately transmitted through a remote payment application executed by a processor of the corresponding remote payment apparatus 200. The contact information includes, for example, a phone number of the mobile terminal, other identification information of the mobile terminal, or an identifier of an application installed and to be executed by the mobile terminal, for example. Also, the card indication information may be generated based on the card information. For example, the card indication information may include at least one of serial numbers including at least a portion of card number. The at least one of serial numbers may be, for example, the last four digits of the card number of the card information. The card indication information may also be information indicative of one of card information stored in the mobile terminal, such as information that identifies or distinguishes between card information from among plural card information stored in the mobile terminal, e.g., distinguishing between different credit cards that the master user of the mobile terminal is an authorized user.

Herein, the payment information may be information associated with a payment. For example, the payment information may include information of at least one of a type of business, a name of merchant, an address of the merchant, a selling item, and a selling price with respect to a transaction, such as for a current transaction the representative user is attempting. The payment information may also include a payment request that is transmitted to the mobile terminal to request a payment be performed. For example, the payment information may be transmitted from the remote payment apparatus 200 of the representative user to the remote payment apparatus 200 of the master user.

The processor 220 performs processing for providing a remote payment method to at least one of the example first and second users of FIG. 1, for example. The processor 220 controls the communicator 210. The processor 220 of the remote payment apparatus 200 as the mobile terminal determines whether received payment information satisfies a payment condition assigned to the card indication information, e.g., previously assigned as corresponding to such card indication information. When the processor 220 of the remote payment apparatus 200 as the mobile terminal determines that the payment information satisfies the payment condition, the processor 220 may provide card information corresponding to the card indication information to at least one of a remote payment apparatus 200 as the agent terminal and/or the server, using the communicator 210 of the remote payment apparatus 200 as the mobile terminal. The processor 220 of the remote payment apparatus 200 as the agent terminal generates or selects the card indication information for transmission to the remote payment apparatus 200 as the mobile terminal, e.g., in response to a manipulation of a user interface of the remote payment apparatus 200 as the agent terminal by the first user.

Also, in an example, the communicator 210 of the remote payment apparatus 200 as the mobile terminal may receive a request for card indication information from the remote payment apparatus 200 as the agent terminal. In response to the request, the processor 220 of the remote payment apparatus 200 as the mobile terminal may generate the card indication information and provide the card indication information to the remote payment apparatus 200 as the agent terminal. Thereafter, in response to payment information based on the card indication information being received by the remote payment apparatus 200 as the mobile terminal from the remote payment apparatus 200 as the agent terminal, the processor 220 of the remote payment apparatus 200 as the mobile terminal may determine whether to permit a payment corresponding to the payment information.

FIG. 3 illustrates an example remote payment apparatus 300 that includes a communicator 310, a processor 320, a storage 330, a display 340, an input receiver 350, and a contact detector 360, for example.

The communicator 310 may operate similarly to the communicator 210 as described with reference to FIG. 2.

The processor 320 may control at least one of the communicator 310, the storage 330, the display 340, the input receiver 350, and the contact detector 360, for example, to perform one or more or all remote payment methods described herein. Also, the processor 320 may perform processing for operating the remote payment apparatus 300. Here, the performing of processing may correspond to an operation of executing a program code stored in the storage 330, such as executing instructions to implement different application programs or functions of the remote payment apparatus 300. For example, the remote payment apparatus 300 may be a mobile phone, tablet, laptop, or wearable device, such as a smart watch, with respective inherent functions in addition to those of the remote payment method. As another example, the remote payment apparatus 300 may be an alternate type of terminal device, such as a desktop computer, television, smart home hub, vehicle, etc.

The storage 330 is one or more non-transitory computer readable media that, in addition to other information and data, store one or more programs including respective instructions, that when respectively executed by one or more processors cause the one or more processors to implement one or more or all remote payment methods described herein, other application methods, and other inherent operations and functions of the remote payment apparatus 300. The program/instructions stored in the storage 330 may be executed by the processor 320. Herein, such a program and/or instructions that when executed by such a processor to cause the processor to implement the remote payment method will also be referred to as a remote payment application. In the mobile terminal, the storage 330 may store the card information. Here, the storage 330 may be representative of multiple storages, including one or more that securely store the card information. In the agent terminal, the storage 330 may store at least one of one or more card indication information and one or more card information. As only an example, if a card consignment is prohibited by law in a region, the processor 320 may be configured to control the storage 330 of the agent terminal to only store the card indication information excluding the card information. In addition, with such an example, as a locality of the remote payment apparatus 300 is determined to have changed by the corresponding processor 320, for example, the corresponding processor 320 may control the storage 330 to store both the card indication information and the card information, for example.

The display 340 displays a page or image, e.g., of the example remote payment application executed by a corresponding remote payment apparatus 300, associated with a current remote payment for viewing by a user. Under a control of the processor 320, the display 340 may display such a page based on information associated with the current remote payment or for assigning conditions for permitting future representative payments. In the mobile terminal, the display 340 may visually realize a user interface associated with whether the remote payment is permitted, whether the remote payment may selectively be permitted, and/or under what conditions such a remote payment may be automatically permitted, as only examples, e.g., for viewing by the example master user. In the agent terminal, the display 340 may visually realize a user interface associated with a remote payment result, for example, such as for viewing by the representative user. In an example, the user interface may be configured for entry by the representative user of suggested conditions under which future remote payments could be automatically permitted, e.g., with such suggestions then being provided through the user interface of the mobile terminal for approval or modification. Such visualized information is not limited to the foregoing examples and thus, may vary based on embodiment and implementation.

The input receiver 350 receives a user input from a user. The processor 320 converts the user input received through the input receiver 350 into a command associated with the remote payment, for example. The user input includes, for example, an input of selecting card information from a plurality of items of card information and an input of selecting card indication information from a plurality of items of card indication information. In this disclosure, an input includes all type manipulation inputs received from the example first user and example second user, i.e., respectively the representative user and the master user, in association with a remote payment. The user input includes an input of, as only non-limiting examples, a touch manipulation for the display 340 corresponding to a touchscreen, a click manipulation using a pointing device such as a mouse, a contacting manipulation using an electrical pen, and a virtual reality (VR)/augmented reality (AR)-based manipulation.

The contact detector 360 detects a contact between a terminal and a payment terminal, for example, or other terminal depending on other operations of the terminal. For example, the contact detector 360 may detect a contact between the agent terminal and a payment terminal. Here, in response to a distance between the agent terminal and the payment terminal being determined to be less than or equal to a threshold distance, the contact detector 360 determines or detects that a contact between the agent terminal and the payment terminal occurs. For example, the contact detector 360 detects the contact based on an NFC connection between the agent terminal and the payment terminal. Here, for example, the communicator 310 of the agent terminal may receive payment information from the payment terminal in response to the contact between the agent terminal and the payment terminal. The agent terminal may then forward that payment information to the mobile terminal, for example.

The mobile terminal may perform a remote payment using the agent terminal of the first user as a representative payer located in a venue remote from the second user, e.g., representing an example where payment by the second user is not available due to restrictions on time and location of the second user. To this end, the respective remote payment applications may be installed in the mobile terminal and the agent terminal. However, the present disclosure is not limited thereto. In one example, the mobile terminal and the agent terminal include different remote payment applications and the different remote payment applications include remote payment modules having a common protocol.

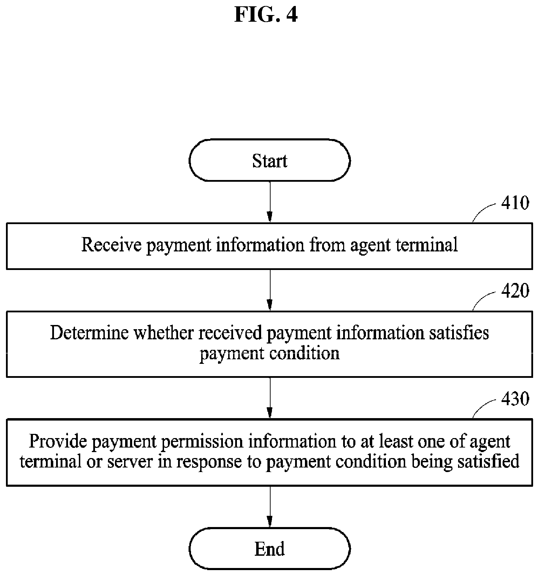

FIG. 4 illustrates an example remote payment method performed by a second user terminal.

In operation 410, a mobile terminal receives payment information from an agent terminal. Also, the mobile terminal receives card indication information from the agent terminal in addition to the payment information. For example, the mobile terminal receives payment information generated by a payment terminal through the agent terminal in response to a contact between the payment terminal and the agent terminal.

The mobile terminal may execute a remote payment application, such as in response to receipt of the payment information. As only an example, the mobile terminal may establish a communication channel with the agent terminal, such as with an associated agent remote payment application of the agent terminal, and thus, may receive the payment information through such a communication channel. For example, the communication channel may be a secure communication channel, such as a virtual private network or secure tunnel. As another example, the mobile terminal may establish such a communication channel between the remote payment application of the mobile terminal and the agent remote payment application of the agent terminal associated with the remote payment application of the mobile terminal, or the agent terminal may establish the communication channel between the agent remote payment application of the agent terminal and the remote payment application of the mobile terminal. Thus, the mobile terminal may receive the payment information and the card indication information through this communication channel between the mobile terminal and the agent terminal. The agent terminal may also receive payment permission information and/or card information corresponding to the card indication information through such a communication channel. In an example, the agent terminal may receive the payment permission information and/or the card information through the same communication channel that the payment information was provided from the agent terminal to the mobile terminal, though embodiments are not limited thereto.

In this disclosure, the agent application or agent remote payment application is an application of the agent terminal and may be used for establishing a communication or communication channel with a remote payment application of the mobile terminal in association with a remote payment and which both may implement one or more or all remote payment methods described herein. The agent application of the agent terminal may have the same program instructions as the remote payment application of the mobile terminal or the respective applications may be different but include a same remote payment module, as only examples. Accordingly, one or more embodiments include non-transitory computer-readable media that store respective instructions of the remote payment application and/or the agent remote payment application, that when executed by a processor, cause the processor to implement one or more or all methods described herein.

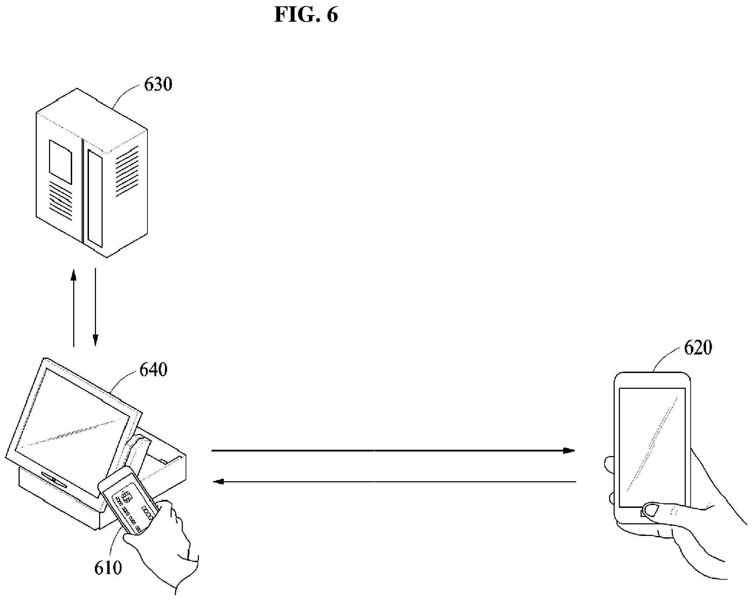

In operation 420, the mobile terminal determines whether the received payment information satisfies a payment condition. For example, the mobile terminal determines whether the payment condition satisfies a previously set payment condition, e.g., a payment condition determined to be assigned or corresponding to the card indication information. The payment condition may be previously assigned for such card indication information based on a user manipulation of the mobile terminal, for example. In response to at least one item of a plurality of preset items associated with the payment being designated as the payment condition, the mobile terminal determines whether the payment information satisfies at least one of the designated payment conditions. The preset items associated with the payment may include at least one of a type of business, a name of seller, an address of the seller, a selling item, or a price range, as only examples. The payment condition is not limited to the foregoing examples and thus, may vary depending on embodiment. Related example descriptions will be further provided based on various scenarios with reference to FIGS. 6 through 14.

In operation 430, the mobile terminal may provide payment permission information to at least one of the agent terminal or a server in response to the payment condition being determined to be satisfied. For example, the server may be the server 130 of FIG. 1. Also, the mobile terminal may provide card information corresponding to the card indication information in addition to the payment permission information. For example, the mobile terminal may transmit the card information and the payment permission information to the agent terminal through the communication channel between the remote payment application and the agent application, or may transmit the card information and the payment permission directly to the server.

Thus, in response to the payment information being determined to satisfy the payment condition, the mobile terminal permits a payment corresponding to the payment condition and may provide the card information corresponding to the card indication information to the agent terminal. In an example, the agent terminal does not locally store the card information, but may only transmit or forward the received card information to the payment terminal, for example. The payment terminal may then request that the server approve the payment based on the transferring of the card information from the payment terminal to the server.

In another example, when the payment is permitted, the mobile terminal provides the card information to the server and requests that the server approve the payment. In this example, the server determines whether to approve the payment based on the payment information and a payment request received from the mobile terminal. Also, the server provides notification on a payment result to at least one, any two, or all of the mobile terminal, the agent terminal, or the payment terminal.

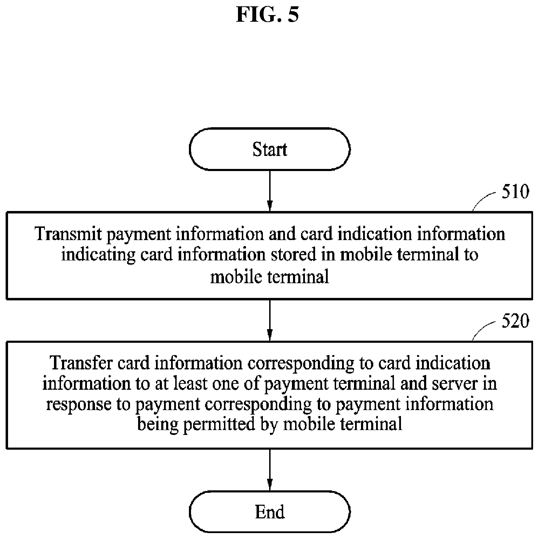

FIG. 5 illustrates an example remote payment method performed by a first user terminal.

In operation 510, an agent terminal transmits payment information and card indication information indicative of card information stored in the mobile terminal to the mobile terminal. For example, the agent terminal requests the mobile terminal permit a payment corresponding to the payment information using a card indicated by the card indication information, for example, a card for payment.

For example, while executing a remote payment application, the agent terminal may select the card indication information from among plural card indication information in response to a reception of a user manipulation of the agent terminal. For example, the agent terminal may have received at least one item of card indication information indicative of card information from the mobile terminal and may have stored the received card indication information. In this example, the agent terminal does not store the card information, but only stores the card indication information indicative of the card information. The first user of the agent terminal may, thus, select one of the one or more card indication information in response to user manipulation of the agent terminal.

In an example, the agent terminal may alternatively, or in addition, store at least one card information. For example, the agent terminal may receive (or capture) and encrypt card information and store the encrypted card information. For example, when a consignment of a card is allowed by the law in a region, the agent terminal may stores the encrypted card information. In this example, the agent terminal may send a request for permission associated with the payment information to the mobile terminal and may forward card information to the payment terminal based on permission received from the mobile terminal without needing to receive the card information from the mobile terminal. The agent terminal may also generate card indication information corresponding to one or more of the at least one card information, and may transmit the generated card indication information to the mobile terminal for payment permission.

In operation 520, in response to a payment corresponding to the payment information being indicated as being permitted by the mobile terminal, the agent terminal may transfer the card information corresponding to the card indication information to at least one of the payment terminal and the server. For example, the agent terminal may transfer the card information to the payment terminal to make a request for payment approval, and the payment terminal may request the server approve the payment based on the card information. Also, the agent terminal may directly request the server approve the payment thereby bypassing the payment terminal.

When the agent terminal stores the card indication information, the agent terminal may receive notification from the mobile terminal regarding payment permission and also the card information for the payment. For example, in response to the card information corresponding to the card indication information being received from the mobile terminal, the agent terminal may transfer the received or stored card information to at least one of the payment terminal or the server. When the card information is transmitted by the mobile terminal, it may thereby be an indication by the mobile terminal that the mobile terminal has permitted the payment. For example, when the agent terminal does not store the card information, receipt of the card information from the mobile terminal may also be the indication of the permission of the payment, and the agent terminal may then transfer the received card information to the payment terminal.

Accordingly, the agent terminal performs the payment in response to the notification on the payment permission being received from the mobile terminal. In the example where the agent terminal stores the card information, the agent terminal may not need to receive the card information from the mobile terminal. Rather, in response to payment permission information corresponding to the payment being received from the mobile terminal, the agent terminal may transfer the stored card information to at least one of the payment terminal or the server. The payment permission information may be information from the mobile terminal indicating that the payment is permitted using the card information stored by the agent terminal. In addition, in an example, the payment permission information may indicate whether the agent terminal is permitted to locally store the card information, e.g., so a next payment transaction could be implemented without the mobile terminal transmitting the card information, but rather merely by the mobile terminal providing a payment permission indication for the card information based on card indication information provided from the agent terminal to the mobile terminal, for example.

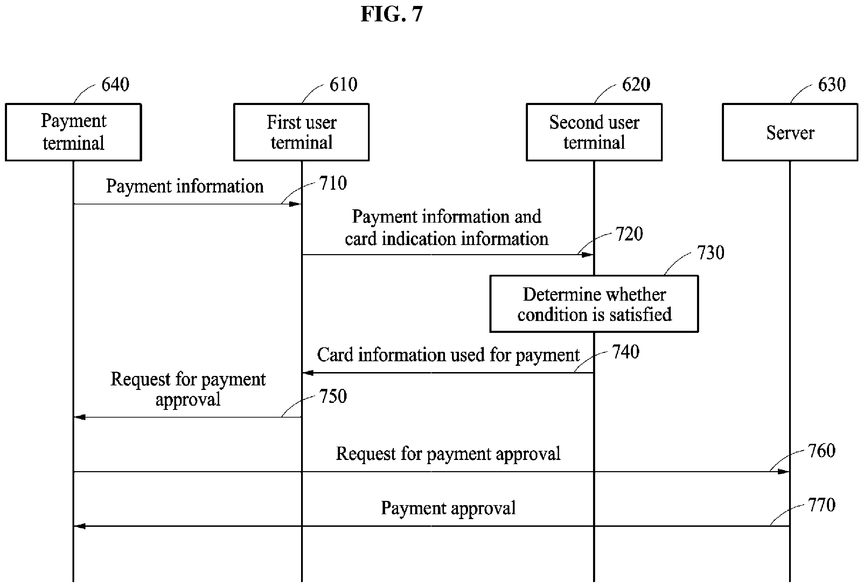

FIGS. 6 and 7 illustrate an example remote payment process in which a second user terminal directly permits a payment.

A first user terminal 610 may send a request for payment permission to a second user terminal 620. The first user terminal 610 may be an agent terminal and the second user terminal 620 may be a mobile terminal. For example, the mobile terminal may automatically provide notification of the payment permission directly to the agent terminal without passing through another device. In response to receipt of the payment permission, the agent terminal may automatically transfer card information to the payment terminal 640. The payment terminal 640 requests the server 630 to approve a payment based on the transferred card information. Such an automated procedure of approving a remote payment in the second user terminal 620 will be described in greater detail below with respect to FIG. 7.

In operation 710 of FIG. 7, in response to a detected contact with the first user terminal 610, the payment terminal 640 may generate and transfer payment information to the first user terminal 610. For example, the payment terminal 640 may be a point of sale (POS) terminal located in an affiliated store. In this example, the payment terminal 640 may identify an item code such as a barcode and a quick response (QR) code assigned to an item that is being desired to be purchased by the first user and generates the payment information based on the same. For example, a user of the payment terminal 640 may have optically scanned the barcode or QR code using an optical scanner of the payment terminal 640. Alternatively, the agent terminal may generate the payment information.

In operation 720, the first user terminal 610 transmits the received payment information and card indication information, e.g., card indication information selected by the first user or automatically selected by the first user terminal 610, to the second user terminal 620. The first user terminal 610 transfers the payment information to the second user terminal 620 in response to the payment information being received from the payment terminal 640. Also, the first user terminal 610 may transfer the payment information to the second user terminal 620 in response to an indicated success in a user authentication of a first user by the payment terminal 640 or the first user terminal 610. However, the present disclosure is not limited thereto. Depending on an example, the first user terminal 610 may transfer the payment information to the second user terminal 620 in response to a user manipulation of the first user terminal 610 by the first user selecting a transmitting of the payment information to the second user terminal 620.

In operation 730, the second user terminal 620 determines whether a condition is satisfied. For example, the second user terminal 620 determines whether the payment information satisfies a previously set payment condition. In response to the payment information being determined to satisfy the payment condition, the second user terminal 620 automatically permits the payment. In response to the payment information not satisfying the payment condition, the second user terminal 620 may still receive a permission manipulation for the payment information from the second user, for example. In such an example, in response to the payment information being determined to not satisfy the payment condition, the second user terminal 620 may query the second user whether the second user wants to manually permit the payment even though the payment condition has not been satisfied. The second user terminal 620 may also be configured to determine whether the permission manipulation is valid, such as through an identification authentication operation. In response to the permission manipulation being determined to be valid, the second user terminal 620 provides the payment permission information and card information corresponding to the card indication information to at least one of the agent terminal or the server 630. The permission manipulation may be a manipulation by the second user, for example, for permitting the payment. For example, the permission manipulation may include a manipulation associated with at least one of fingerprint recognition, face recognition, iris recognition, or certificate verification.

The second user terminal 620 may display or visualize the payment information to provide information associated with the payment to the second user. The second user terminal 620 may also display or visualize a determination result of whether the condition has been satisfied so as to inform the second user of whether a payment satisfying a predetermined payment condition has been conducted by the first user. For example, though the second user terminal 620 may automatically permit payment upon a determination by the second user terminal 620 that the condition has been satisfied, the second user terminal 620 may also notify the second user that this automatic payment permitting has occurred.

In operation 740, the second user terminal 620 transfers the card information used for the payment to the first user terminal 610 in response to the payment being permitted. However, the present disclosure is not limited thereto. Depending on an example, the second user terminal 620 may transfer only the payment permission information, e.g., without also transmitting the card information, when the card information is stored by the first user terminal 610 in advance.

In operation 750, the first user terminal 610 sends a request for payment approval to the payment terminal 640. For example, the first user terminal 610 sends the request for payment approval and transfers the card information to the payment terminal 640. In an example where the first user terminal 610 stores only the card indication information and not the corresponding card information, when a payment is not permitted by the second terminal 620 for the payment by the first user terminal 610, the first user terminal 610 may not have the card information, and thus, the first user terminal 610 can be prevented from sending a request for payment approval to the payment terminal 640 with the corresponding card information without permission of the second user terminal 620.

In operation 760, the payment terminal 640 transfers the request for payment approval received from the first user terminal 610 to the server 630.

In operation 770, the server 630 provides notification on the payment approval to the payment terminal 640 in response to the payment being approved. The payment terminal 640 outputs information associated with the payment approval and completes the payment.

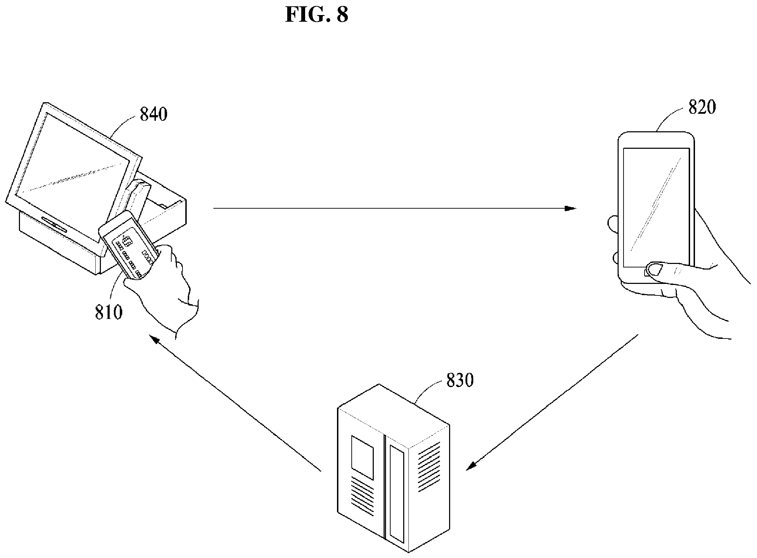

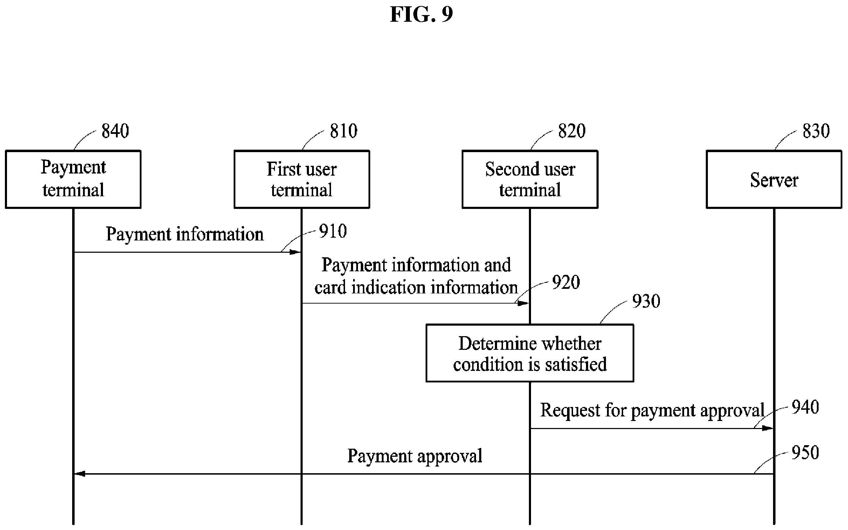

FIGS. 8 and 9 illustrate an example remote payment process in which a second user terminal indirectly permits a payment.

A second user terminal 820 may provide notification on payment permission indirectly to a first user terminal 810 through another device. The second user terminal 820 may be a mobile terminal and the first user terminal 810 may be an agent terminal. When a payment is permitted, the mobile terminal may transmit a request for payment approval and card information to the server 830, e.g., without transmitting payment permission or card information to the first user terminal 810. When the server 830 provides notification on the payment approval to the payment terminal 840, and the payment terminal 840 communicates the payment approval to the first user terminal 810, a first user of the first user terminal 810 may, thus, be indirectly acknowledged or informed that the payment has been approved. Such a procedure of indirectly approving a remote payment in the second user terminal 820 will be described in greater detail below with respect to FIG. 9.

In operation 910 of FIG. 9, the payment terminal 840 generates payment information and transfers the payment information to the first user terminal 810, for example, in response to a contact with the first user terminal 810. For this operation, the payment terminal 840 may perform an operation similar to operation 710.

In operation 920, the first user terminal 810 may transfer the payment information and corresponding card indication information to the second user terminal 820. Thus, for this operation, the first user terminal 810 may perform an operation similar to operation 720.

In operation 930, the second user terminal 820 may determine whether the payment information and the card indication information satisfy a condition. As discussed in the foregoing explanations, the second user terminal 820 may determine whether the payment information satisfies a payment condition previously assigned or corresponding to the card indication information, and determine whether an alternate approval is indicated by a second user of the second user terminal 820, for example, based on an approval manipulation being received by the second user terminal 820, when the payment condition is not satisfied.

In operation 940, the second user terminal 820 transmits a request for payment approval to the server 830 in response to the payment being permitted, e.g., without sending an indication of payment permission to the first user terminal 810. The second user terminal 820 may transmit the card information directly to the server 830. Through this, with the first user terminal 810 not receiving the card information or not needing to receive the card information, the first user terminal 810 may be prevented from storing the card information and a risk that the first user uses a card without permission may be reduced.

In operation 950, the server 830 sends notification about the payment approval to the payment terminal 840. The payment terminal 840 outputs a result of the payment approval, e.g., to the first user terminal 810. However, the present disclosure is not limited thereto. Depending on embodiment, the server 830 may provide notification about the payment approval to the first user terminal 810 and/or the second user terminal 820.

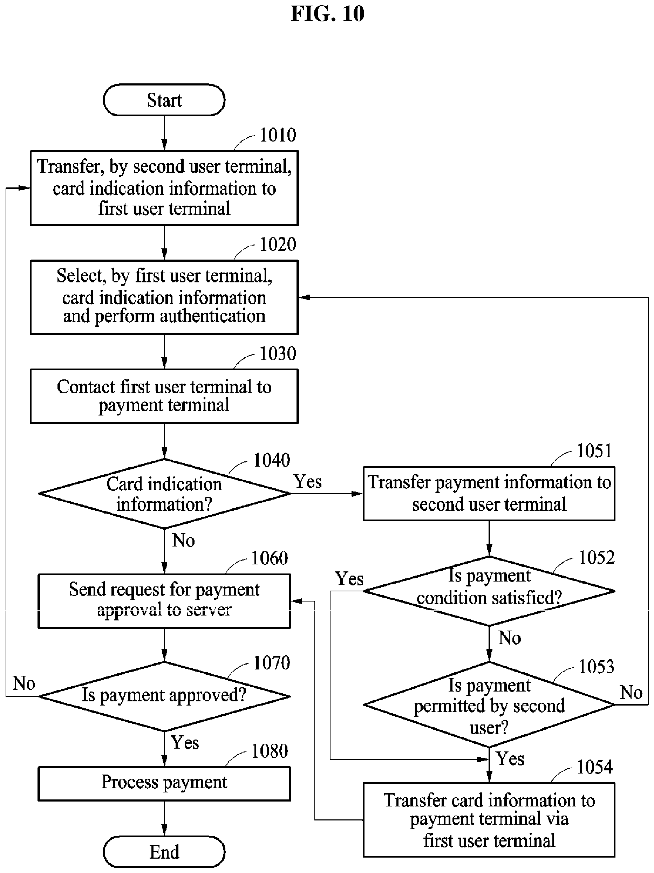

FIG. 10 illustrates an example remote payment method.

In operation 1010, a second user terminal transfers card indication information to a first user terminal. For example, the second user terminal may generate card indication information that is indicative of card information that may be stored or available to the second user terminal, or for which a second user of the second user terminal is an authorized user. The second user terminal may be a mobile terminal and the first user may be an agent terminal. For a remote payment, a remote payment application having a common payment module may be installed in the mobile terminal and the agent terminal for a remote payment. The mobile terminal may use the respective remote payment applications to transmit the card indication information to the agent terminal. For example, operation 1010 may be performed in advance of a current payment being requested. Thus, the agent terminal may receive the card indication information from the mobile terminal and store the card indication information before the current payment is initiated.

The mobile terminal may receive a generation request for the card indication information indicative of the card information stored in the mobile terminal from at least one of the agent terminal and another user, for example, the second user of the mobile terminal. In response to the generation request, the mobile terminal generates the card indication information and provides the card indication information to the agent terminal. For example, the mobile terminal transfers card indication information corresponding to card information selected by the second user to the agent terminal.

Also, the mobile terminal may assign a payment condition to the card indication information in response to a reception by the mobile terminal of a user manipulation of the second user. For example, the second user may set a payment condition to be assigned to a predetermined item of the card indication information using the mobile terminal. The mobile terminal assigns the payment condition to at least one of an item associated with a payment transaction, an item associated with a device of the agent terminal, and an application installed in the agent terminal. The item associated with a payment or payment transaction may include at least one of, for example, a type of business, a name of seller, an address of the seller, a selling item, or a price range. The item associated with a device of the agent terminal may include at least one of, for example, a phone number of the device, a device identification number, location information of the device, information associated with an application that is currently executed in the device, or battery information of the device. The item associated with an application may be information to be collected by one or more applications executed by the agent terminal, for example. The item associated with an application may include information associated with, for example, a step count, an ambient temperature, a user schedule, a photo gallery, a map, user authentication information, and a message.

In operation 1020, the first user terminal selects the card indication information, e.g., from among plural card indication information stored by the first user terminal, and performs authentication. For example, in response to a user manipulation of the first user, the agent terminal may be controlled to select a card indication information corresponding to a select card that is desired for use for a current payment within a remote payment application being executed by the agent terminal. Also, the agent terminal may be configured to verify whether the first user is a valid user, e.g., by performing an authentication operation. In response to the first user being verified as the valid user, the agent terminal may enter a payment available state. The payment available state may indicate a standby state of the agent terminal for a contact with the payment terminal for a payment. The user verification or authentication may be performed through, for example, fingerprint recognition, iris recognition, face recognition, and a password input.

In operation 1030, the first user terminal may be detected or determined to be in contact, or to have made contact, with the payment terminal. For example, when in the example payment available state, the agent terminal may be controlled to consistently or continually detect for whether the agent terminal has made contact with the payment terminal. Herein, contact may include one or more of direct physical contact between two devices, physical coupling of electromagnetic fields between adjacent devices, or contact through an established communication channel between such devices, as only examples.

In operation 1040, the first user terminal determines whether information included in the first user terminal is the card indication information. For example, when the first user terminal has the card indication information, the first user terminal transmits the card indication information to the second user terminal and receives card information from the second user terminal through operations 1051 to 1054 based on a payment permission by the second user terminal. Also, when the first user terminal already stores card information, e.g., of an actual card for which such card indication information is indicative of, to be used for the payment, the first user terminal performs the payment processing through operations 1060 to 1080 based on the payment permission from the second user terminal.

In operation 1051, the first user terminal may transfer the payment information to the second user terminal when the first user terminal has the card indication information and has transmitted the card indication information to the second user terminal. For example, the agent terminal may transmit the payment information and a request for payment permission to the mobile terminal. Also, the mobile terminal may also receive device information of the agent terminal and additional information collected by another application installed in the agent terminal from the agent terminal.

In this disclosure, the device information of the agent terminal is information associated with a device of the agent terminal. The device information may include at least one of, for example, a phone number, a device identification number, location information of the device, information associated with an application that is currently executed in the device, or battery information of the device. The additional information is information to be additionally collected by the other application. The additional information may include information associated with, for example, a step count, an ambient temperature, a user schedule, a photo gallery, a map, user authentication information, and a message.

The mobile terminal may also request the agent terminal transmit information other than the payment information associated with a payment transaction. For example, when a payment condition assigned to the card indication information is associated with at least one of the device of the agent terminal or the another application installed in the agent terminal, the mobile terminal may send a request for at least one of the device information of the agent terminal or the additional information to be collected by the other application to the agent terminal. In response to the request, the agent terminal may further transmit at least one of the device information or the additional information to the mobile terminal.

In operation 1052, the mobile terminal determines whether the payment condition is satisfied. For example, for such a situation when the second user of the mobile terminal may have difficulty in responding to a request for payment permission in real time, the mobile terminal may automatically determine whether the payment condition is satisfied and automatically permit the payment. The payment condition may be a condition previously defined or approved of by the second user.

When at least one item of a plurality of items set in association with the payment transaction is designated as a payment condition, the mobile terminal determines whether the payment information satisfies at least one of the payment conditions corresponding to the designated at least one item. Also, when at least one item of a plurality of items set in association with the device of the agent terminal is designated as the payment condition, the mobile terminal determines whether the device information satisfies at least one of the payment conditions corresponding to the designated at least one item. When at least one item of a plurality of items set in association with the other application is designated as a payment condition, the mobile terminal determines whether the additional information satisfies at least one of the payment conditions corresponding to the designated at least one item.

For example, in an example where the mobile terminal assigns "seller: DEF store in ABC region", "price range: a range from 100,000 to 120,000 won", "the number of payments: once", and "first user: HIJ" to card indication information as a corresponding payment condition based on a user manipulation of the second user, when a payment request is sent from HIJ corresponding to the first user, and when a designated payment condition is satisfied, the mobile terminal may automatically permit the payment. When the payment is permitted, the mobile terminal may automatically transfer the card information to the payment terminal in operation 1054.

Also, the agent terminal may autonomously determine whether the payment condition is satisfied. For example, when the payment information is determined by the agent terminal to satisfy the payment condition assigned to the card indication information, the agent terminal may then send a request for the card information corresponding to a corresponding card indication information to the mobile terminal. In an example, when the agent terminal determines that the payment information satisfies the payment condition, the agent terminal may transmit the payment information and the card indication information to the mobile terminal. When the agent terminal determines that the payment information does not satisfy the payment condition, the agent terminal excludes a transmission of the request for the card information or the payment information and the card indication information to the mobile terminal, and automatically determines that payment is not permitted. For example, when the agent terminal autonomously determines that the payment condition is not satisfied, the transmission of the card indication information to the mobile terminal may be prevented from occurring and not performed, and thus, an unnecessary quantity of data communication between the agent terminal and the mobile terminal may be reduced. The first user of the agent terminal may be notified of the condition not being satisfied.

In operation 1053, the second user of the mobile terminal may determine whether the payment is permitted when the payment condition is not satisfied. For example, in response to the payment request being received from the agent terminal and a condition not being previously assigned or the condition not being satisfied, the mobile terminal may send a request for permission manipulation to the second user in real time. For example, when the payment condition is not satisfied, the mobile terminal may request and receive a permission manipulation associated with the payment information from a user of the mobile terminal and determine whether the permission manipulation is valid or authorized.

For example, the mobile terminal or previously verified/authorized user of the mobile terminal may set a permission manipulation for the card indication information in advance. The permission manipulation may be a manipulation based on, for example, a password input, and biosignal verification. The biosignal verification includes, for example, the fingerprint recognition, the face recognition, and the iris recognition. The mobile terminal receives a biosignal from the user as the permission manipulation. The mobile terminal searches a database for registered biometric information matching the biosignal. The mobile terminal may then determine that the permission manipulation is valid in response to the registered biometric information being found.

In an example, the agent terminal may send a request for a payment permission manipulation to the mobile terminal and the mobile terminal may then be controlled to inform the agent terminal about the payment permission through a communication such as a phone call, a short message service (SMS), a messenger, an application and the like, which the agent terminal may be configured to recognize and use to permit sharing of card information to a payment terminal, for example, such as when the agent terminal already stores card information corresponding to card indicating information sent to the mobile terminal with the request for the payment permission manipulation.

In operation 1054, the second user terminal may transfer the corresponding card information to the payment terminal through the first user terminal, i.e., the second user terminal may transfer the corresponding card information to the first user terminal, and the first user terminal may transfer the received card information to the payment terminal. Thus, a mobile terminal may transfer information on a payment permission to an agent terminal. When the payment is permitted, the mobile terminal transfers card information of a card or tender to be used for the payment to the payment terminal through the agent terminal. For example, the agent terminal may be prevented from storing the card information, so the card information is transferred through the agent terminal to the payment terminal without storing the card information in the agent terminal.

When the payment is not permitted, the agent terminal may return to operation 1020, and the first user of the agent terminal may select a different card indication information.

In operation 1060, the payment terminal sends a request for payment approval to the server. For example, the payment terminal transmits the received card information and the request for payment approval to the server. However, the present disclosure is not limited thereto. Depending on an example, the mobile terminal or the agent terminal transfers the request for payment approval and the card information to the server, e.g., bypassing the payment terminal.

In operation 1070, the server determines whether to approve the payment.

In operation 1080, the server processes the payment when the payment is approved. When the payment is not approved, the first user terminal may implement operation 1020 again to select another card indication information corresponding to a different card information or the second user terminal may implement operation 1010 again to provide the first user terminal another card indication information corresponding to such a different card information.

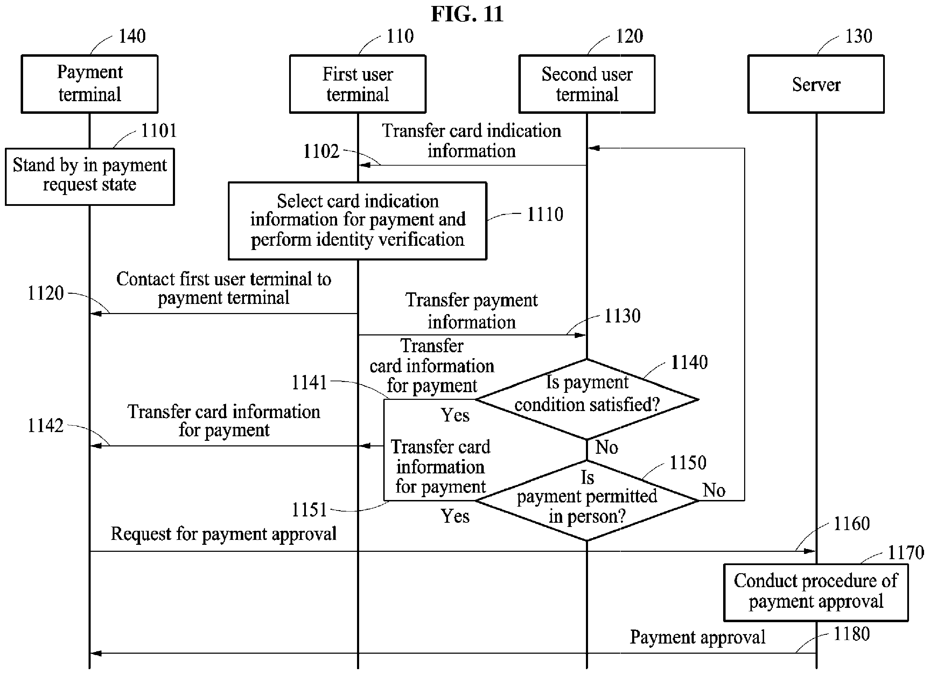

FIG. 11 illustrates an example remote payment method.

In operation 1101, the payment terminal 140 may be in a standby mode or state in a payment request state for example. The payment request state indicates a corresponding standby state of the payment terminal 140 for receiving a payment request from another terminal, for example. In this example, the payment request state may be a state in which a detection for a contact with an example first user terminal 110 is continuously, routinely, or selectively performed. The payment request state may also indicate a state in which payment information has been generated by the payment terminal 140 based on select goods or services for which a payment is to be carried out on, e.g., for a current or future payment transaction. In this example, the payment request state may be a standby state for transferring such payment information to the example first user terminal 110.

In operation 1102, the second user terminal 120 transfers card indication information to the first user terminal 110. Operation 1102 may occur at any time, for example. The first user terminal 110 may receive the card indication information from the second user terminal 120. Transmission of the card indication information may be performed prior to the current payment transaction. For example, the second user terminal 120 generates card indication information indicating one of card information stored in the second user terminal 120. The second user terminal 120 provides the generated card indication information to the first user terminal 110.

In operation 1110, such as based on a first user selection or automated selection, the first user terminal 110 selects card indication information for the payment and performs identity verification of the first user. For example, the first user terminal 110 selects card indication information stored in the first user terminal 110 in response to a first user manipulation received from the first user. The first user terminal 110 may enter a payment available state in response to a success in the identity verification performed through a user authentication of the first user.

In operation 1120, contact between the first user terminal 110 and the payment terminal 140 may be determined or detected by either of the first user terminal 110 or the payment terminal 140. As discussed above, in an example, such a contact between the first user terminal 110 and the payment terminal 140 is detected through an NFC connection. A method of detecting the contact is not limited to the foregoing example and thus, the contact may also be detected based on a distance between the first user terminal 110 and the payment terminal 140 which is measured based on various types of communications between the two terminals and a communication status therebetween. In an example, the payment information may be generated in response to the determination of the contact and then provided to the first user terminal 110 or already generated payment information may be provided from the payment terminal 140 to the first user terminal 110 upon the determination of the contact.

In operation 1130, the first user terminal 110 transfers the payment information to the second user terminal 120. The second user terminal 120 receives the payment information from the first user terminal 110. For example, the first user terminal 110 transmits the payment information and the selected card indication information to the second user terminal 120 in response to the contacting of the payment terminal 140 and after receipt of the payment information from the payment terminal 140.

In operation 1140, the second user terminal 120 determines whether a payment condition is satisfied.

In operation 1141, the second user terminal 120 may transfer card information stored in the second user terminal 120 to the first user terminal 110 when the payment information satisfies the payment condition. For example, the second user terminal 120 transmits card information corresponding to the selected card indication information to the first user terminal 110 when the payment information satisfies the payment condition assigned to the selected card indication information. In an example of FIG. 11 the card information may also be referred to as payment card information.

In operation 1150, the second user terminal 120 determines whether the payment is permitted by the second user personally using the second user terminal 120 when the payment condition is not satisfied. The second user terminal 120 visualizes or displays information such as the payment information, device information, additional information, and the like provided by the first user terminal 110 with, or corresponding to, the payment information and provides the visualized or displayed information to the second user. For example, the second user may personally selectively determine whether to permit the payment based on the received information. When the second user does not permit the payment, the second user terminal 120 returns to an initial state.

In operation 1151, the second user terminal 120 transmits the card information to the first user terminal 110 when the payment is selected as being permitted by the second user.

In operation 1142, the first user terminal 110 transfers the card information received from the second user terminal 120 to the payment terminal 140. For example, the first user terminal 110 may be prevented from storing the card information, or may selectively not store the received card information, and transmits the card information to the payment terminal 140. However, the present disclosure is not limited thereto. Depending on an example, the first user terminal 110 may send a payment request to at least one of the payment terminal or a request for payment approval to the server 130 based on the payment information and the card information.

In operation 1160, the payment terminal 140 transmits the card information and such a request for payment approval to the server 130. In operation 1170, the server 130 conducts a procedure of the payment approval. In operation 1180, the server 130 sends notification on the results of the payment approval to the payment terminal 140, e.g., by sending notification of a payment approval to the payment terminal 140 in response to a success in the payment approval. The payment terminal 140 may visually output the payment approval. The first user terminal 110 may also be provided such a notification, either from the server 130 or the payment terminal 140, and may visually output the payment approval.

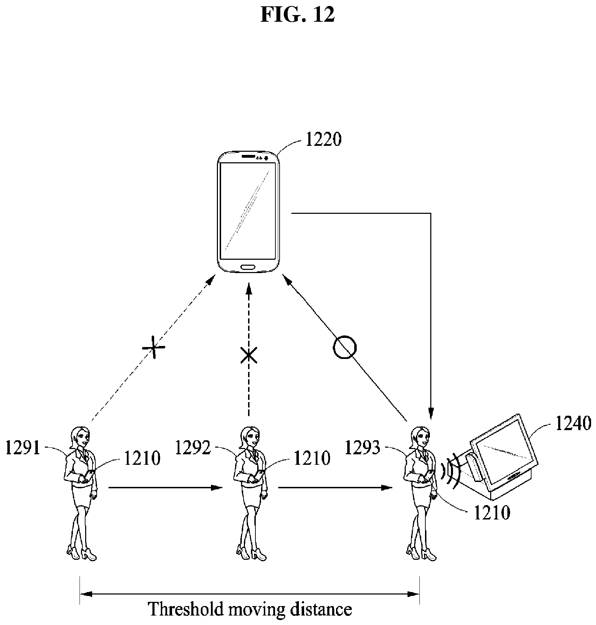

In the examples of FIGS. 4 through 11, the foregoing operations may also be performed by various configurations of a remote payment system in lieu of the aforementioned elements depending on embodiment. Also, depending on an example, the operations of FIGS. 4 through 12 and below FIGS. 12 through 14 may be performed through any combinations thereof.

FIGS. 12 through 14 illustrate example remote payment implementations according to one or more embodiments.

FIG. 12 illustrates an example payment permission process performed based on a moving distance corresponding to additional information.

As a payment condition assigned to card indication information, a mobile terminal 1220 may set a condition that a payment is automatically permitted when an agent terminal 1210 moves by at least a threshold moving distance relative to a start position 1291. The mobile terminal 1220 set a position of the agent terminal 1210 corresponding to a point in time at which the payment condition is assigned to be the start position 1291. For example, the mobile terminal 1220 receives a payment request and information on a current location of the agent terminal 1210 corresponding to a payment request transmission time from the agent terminal 1210. Also, the mobile terminal 1220 compares the current location to the start position 1291 and permits the payment when a distance between the current location and the start position 1291 is greater than or equal to the threshold moving distance.

As illustrated in FIG. 12, when the agent terminal 1210 of a first user transmits the payment request at the start position 1291, the mobile terminal 1220 does not permit the payment.

When the agent terminal 1210 transmits the payment request at an intermediate position 1292, the mobile terminal 1220 receives information associated with the intermediate position 1292 from the agent terminal 1210. The mobile terminal 1220 compares the intermediate position 1291 to the start position 1291 and rejects the payment request when the distance between the current location and the start position 1291 is less than the threshold moving distance.

When the agent terminal 1210 located at an end position 1293 transmits a payment request, e.g., a request that is made in response to a contact with a payment terminal 1240 at the end position 1293, the mobile terminal 1220 receives information associated with the end position 1293 from the agent terminal 1210. The mobile terminal 1220 compares the end position 1291 to the start position 1291 and permits the payment because the distance between the end position 1293 and the start position 1291 is greater than or equal to the threshold moving distance.

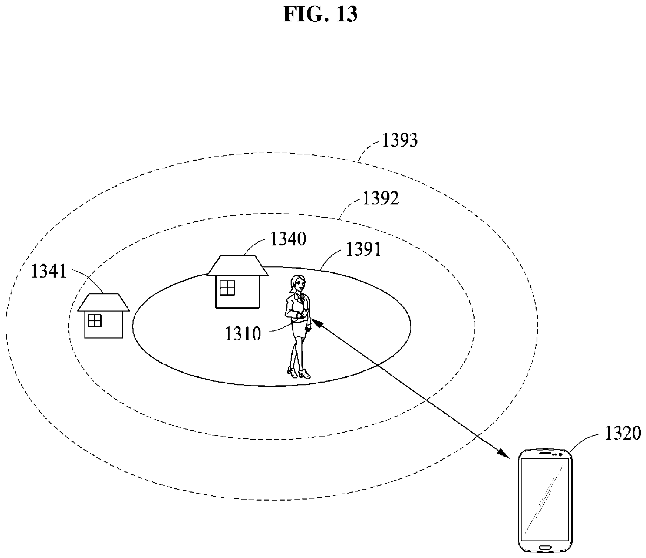

FIG. 13 illustrates an example payment permission process based on a payment occurring position corresponding to additional information.

As a payment condition assigned to card indication information, a mobile terminal 1320 may set a condition that a payment occurring in a store included within a predetermined area is automatically permitted. For example, the mobile terminal 1320 may estimate a position at which the payment occurs based on a store address included in received payment information from the agent terminal. When the estimated position is determined to be within the predetermined area, the mobile terminal 1320 permits the payment. For example, the mobile terminal 1320 receives a payment request and information on a current location from the agent terminal 1310, and permits the payment when the current location is determined to be within the predetermined area.

The mobile terminal 1320 sets a condition that payments occurring in stores included in a plurality of areas to be the payment condition assigned to the card indication information. The mobile terminal 1320 may set a different condition for each of the areas. For example, the mobile terminal 1320 may set a different price range for each of the areas.

The mobile terminal 1320 assigns the payment condition such that a payment corresponding to a first price range is automatically permitted in a first store 1340 included in a first area 1391 and a payment corresponding to a second price range is automatically permitted in a second store 1341 included in a second area 1392. The first price range may have a payment amount limit set to be higher than that of the second price range. According to the assigned payment condition, the mobile terminal 1320 does not permit a payment occurring in a third area 1393. By setting the different price range for each of the areas, a second user of the mobile terminal 1320 may lead or encourage a first user to purchase an item of a store in a predetermined area. When the store is out of service, for example, when the store is closed or when the item is out of stock, the second user may lead or encourage the first user to another store in a same area, for example, as an alternative.

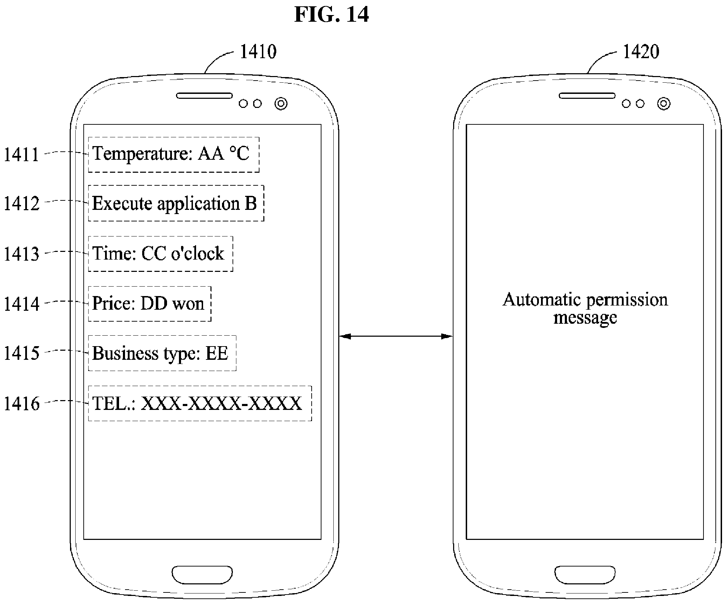

FIG. 14 illustrates an example condition based payment permission process.

As only examples, a mobile terminal 1420 is configured to set, and thus may previously set, an item associated with a payment transaction, an item associated with a device of an agent terminal 1410, and/or item associated with an application installed in the agent terminal 1410, as one or more payment conditions. As illustrated in FIG. 14, the mobile terminal 1420 may visualize or display an automatic permission message when a payment has been automatically permitted based on a payment condition. The automatic permission message may be a message indicating that a payment occurred with the agent terminal 1410, and indicate that the payment was automatically permitted. The message may further include at least one of payment information, device information, or additional information regarding the payment. A second or master user of the mobile terminal 1420 may, thus, conveniently receive a result of representative payments performed by one or more first users through the automatic permission message at long or remote distances.

As illustrated in FIG. 14, the mobile terminal 1420 is configured to set, and thus may previously set, a threshold temperature 'AA' of an ambient temperature to be one of the payment conditions assigned to particular card indication information. For example, the mobile terminal 1420 receives the card indication information, a payment request, and temperature information 1411 measured by the agent terminal 1410 from the agent terminal 1410. When the ambient temperature, for example, 'AA' °C is higher than or equal to the threshold temperature, the mobile terminal 1420 automatically permits the payment.

The mobile terminal 1420 is configured to set, and thus may previously set, whether a predetermined application 'B' has been executed by the agent terminal 1410 as being one of the payment conditions. For example, the mobile terminal 1420 receives application execution information 1412 and the card indication information from the agent terminal 1410. The mobile terminal 1420 automatically permits the payment when the application 'B' has been executed or is executed at the time of the payment transaction, for example.

The mobile terminal 1420 is configured to set, and thus may previously set, a payment time range to be one of the payment conditions. For example, the mobile terminal 1420 receives payment time information 1413 and the card indication information from the agent terminal 1410. The mobile terminal 1420 automatically permits the payment when a payment time, 'CC' o'clock indicated in the payment time information 1413 is within the payment time range.

The mobile terminal 1420 is configured to set, and thus may previously set, a price range to be one of the payment conditions. For example, the mobile terminal 1420 receives payment price information 1414 and the card indication information from the agent terminal 1410. The mobile terminal 1420 automatically permits the payment when a payment price, 'DD' Korean Won indicated in the payment price information 1414 is within the payment price range.

The mobile terminal 1420 is configured to set, and thus may previously set, an example business type 'EE' of a seller, sales establishment, or salesperson to be one of the payment conditions. For example, the mobile terminal 1420 receives seller information 1415 and the card indication information from the agent terminal 1410. The mobile terminal 1420 automatically permits the payment when the business type, e.g., 'EE' included in the seller information 1415, matches at least one designated seller category.

The mobile terminal 1420 is configured to set, and thus may previously set, a phone number to be one of the payment conditions. For example, the mobile terminal 1420 receives device information 1416 and the card indication information from the agent terminal 1410. The mobile terminal 1420 automatically permits the payment when a phone number of the agent terminal 1410 included in the device information 1416 matches a designated phone number.

As examples, the mobile terminal 1420 assigns a payment condition set by combining items of any one or any combination of the aforementioned information to a particular card indication information or for multiple card indication information, e.g., based upon user manipulation and selection of the user interface of the mobile terminal 1420. For example, the second user of the mobile terminal 1420 may set a condition that a payment is permitted when the business type is a bakery and the payment price is under a predetermined price to be the payment condition for which payment will be permitted. The second user of the mobile terminal 1420 may set a condition that a payment under the price is permitted when at least one class is taken in a video lecture application executed by the agent terminal 1410 to be the payment condition for which payment will be permitted. The second user of the mobile terminal 1420 may set a condition that a payment under the price is permitted in a store located in a predetermined region or range at the threshold temperature or higher. The second user of the mobile terminal 1420 may set a condition that a payment under the price is permitted when the payment is requested in the store and a step count measured by a step counter application installed in the agent terminal 1410 is greater than or equal to a threshold step count. The second user of the mobile terminal 1420 may set a condition that a payment is permitted when the payment is requested from a user terminal corresponding to a predetermined phone number and a single payment amount, for example, an expense for one meal is under a predetermined price and within a payment amount limit per day. The second user of the mobile terminal 1420 may set a condition that a payment for a predetermined amount of items is permitted within a predetermined region. Thus, as only an example, varying items may be set for a condition to permit automatic payment approval of a representative user's use of a tender that a master user may be authorized to use, e.g., contractually authorized to use, and for which the representative user may not be otherwise authorized to use.

The payment terminal 140, first user terminal 110, second user terminal 120, server 130, remote payment apparatus 200, communicator 210, processor 220, remote payment apparatus 300, contact detector 360, communicator 310, input receiver 350, processor 320, storage 330, display 340, first user terminal 610, second user terminal 620, payment terminal 640, server 630, first user terminal 810, second user terminal 820, payment terminal 840, server 830, mobile terminal 1220, agent terminal 1210, payment terminal 1240, mobile terminal 1320, agent terminal 1310, mobile terminal 1420, and agent terminal 1410, as only examples, of FIGS. 1-14 that perform the operations described in this application are implemented by hardware components configured to perform the operations described in this application that are performed by the hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-14 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A remote payment method performed by a user terminal, the method comprising:
receiving payment information from an agent terminal;
determining whether the received payment information satisfies a payment condition; and
providing payment permission information to at least one of the agent terminal or a server in response to the payment condition being satisfied.

2. The method of claim 1, wherein the receiving of the payment information includes additionally receiving card indication information,
the determining of whether the received payment information satisfies the payment condition includes determining whether the payment condition satisfies a payment condition assigned to the card indication information, and
the providing includes additionally providing card information corresponding to the card indication information.

3. The method of claim 1, further comprising:
receiving a generation request for card indication information indicative of card information stored in the user terminal from at least one of the agent terminal or the server; and
generating the card indication information in response to the generation request and providing the card indication information to the agent terminal.

4. The method of claim 1, further comprising:
assigning the payment condition to card indication information in response to receiving a user manipulation.

5. The method of claim 1, wherein the receiving of the payment information includes receiving the payment information generated by a payment terminal via the agent terminal in response to a contact between the payment terminal and the agent terminal, and
wherein, in response to at least one item being designated as the payment condition among a plurality of items set in association with a payment, the determining of whether the received payment information satisfies the payment condition includes determining whether the payment information satisfies at least one of the payment condition including the designated at least one item.

6. The method of claim 1, wherein the receiving of the payment information includes additionally receiving device information associated with the agent terminal from the agent terminal, and
wherein, in response to at least one item being designated as the payment condition among a plurality of items preset in association with a payment, the determining of whether the received payment information satisfies the payment condition includes determining whether the device information satisfies at least one of the payment condition including the designated at least one item.

7. The method of claim 1, wherein the receiving of the payment information includes additionally receiving additional information collected by an application installed in the agent terminal from the agent terminal, and
wherein, in response to at least one item being designated as the payment condition among a plurality of items preset in association with a payment, the determining of whether the received payment information satisfies the payment condition includes determining whether the additional information satisfies at least one of the payment condition including the designated at least one item.

8. The method of claim 1, further comprising:
requesting the agent terminal to send at least one of device information associated with the agent terminal and additional information to be collected by an application installed in the agent terminal in response to the payment condition being associated with at least one of a device of the agent terminal and the application.

9. The method of claim 1, further comprising:
receiving a permission manipulation for the payment information from a user in response to the payment condition not being satisfied;
determining whether the permission manipulation is valid; and
providing card information and payment permission information to at least one of the agent terminal or the server in response to the permission manipulation being determined to be valid.

10. The method of claim 9, wherein the receiving of the permission manipulation includes receiving a biosignal from the user, and
the determining of whether the permission manipulation is valid includes:
searching a database for registered biometric information matching the biosignal; and
determining that the permission manipulation is valid in response to the registered biometric information being found.

11. The method of claim 1, further comprising:
executing a remote payment application; and
establishing, with respect to an agent terminal in which an agent application associated with the remote payment application is installed, a communication between the remote payment application and the agent application,
wherein the receiving of the payment information includes receiving the payment information through the communication between the remote payment application and the agent application, and
the providing includes transmitting card information and the payment permission information to the agent terminal through the communication between the remote payment application and the agent application.

12. An agent terminal comprising:
a communicator configured to transmit payment information and card indication information indicative of card information stored in another terminal to the other terminal, and transfer the card information corresponding to the card indication information to at least one of a payment terminal or a server in response to a payment corresponding to the payment information being permitted in the other terminal.

13. The agent terminal of claim 13, further comprising:
a processor configured to receive the card indication information from the other terminal and
storing the received card indication information, and select the card indication information in response to receiving a user manipulation while a remote payment application is executed,
wherein the communicator is further configured to transfer the card information corresponding to the card indication information to at least one of the payment terminal or the server in response to the card information being received from the other terminal.

14. The agent terminal claim 13, further comprising:
a storage configured to store at least one item of card information, and
a processor configured to generate card indication information corresponding to one of the at least one item of card information; and
wherein the communicator is further configured to transmit the generated card indication information to the other terminal, and transfer the card information to at least one of the payment terminal and the server in response to payment permission information corresponding to the payment being received from the other terminal.

15. The agent terminal of claim 13, wherein the communicator is further configured to request the other terminal to send the payment information and the card information corresponding to the card indication information in response to the payment information satisfying a payment condition assigned to the card indication information; and exclude a transmission of the card indication information and the payment information in response to the payment information not satisfying the payment condition.
